(19) Europäisches Patentamt
European Patent Office
Office européen des brevets

(11) **EP 2 690 934 A1**

(12) **EUROPEAN PATENT APPLICATION**
published in accordance with Art. 153(4) EPC

(43) Date of publication:
**29.01.2014 Bulletin 2014/05**

(51) Int Cl.:
*H05H 1/34* (2006.01)    *B22F 5/00* (2006.01)
*B23K 35/32* (2006.01)    *C22C 27/04* (2006.01)
*H01J 1/14* (2006.01)    *H01J 61/06* (2006.01)
*H01J 61/073* (2006.01)

(21) Application number: **12761221.6**

(22) Date of filing: **22.03.2012**

(86) International application number:
**PCT/JP2012/057263**

(87) International publication number:
**WO 2012/128303 (27.09.2012 Gazette 2012/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2011 JP 2011064584**

(71) Applicant: **Nippon Tungsten Co., Ltd.**
**Fukuoka-shi, Fukuoka 812-8538 (JP)**

(72) Inventors:
• **MATSUO, Akira**
**Fukuoka-shi, Fukuoka 812-8538 (JP)**
• **UENO, Yasutsugu**
**Fukuoka, Fukuoka 812-8538 (JP)**
• **KAI, Yusuke**
**Fukuoka, Fukuoka 812-8538 (JP)**

(74) Representative: **Vossius & Partner**
**Siebertstrasse 4**
**81675 München (DE)**

(54) **TUNGSTEN CATHODE MATERIAL**

(57)    Provided is a cathode material which becomes an alternative material of a cathode material formed of a W-ThO$_2$ alloy and is formed of a tungsten alloy that does not include thorium which is a radioactive element. When particles of a rare earth oxide and tungsten carbide are finely dispersed in a tungsten cathode material used as a discharge cathode material used in TIG, plasma spraying, plasma cutting, electrical discharge machining, discharge lamps and the like, reduction and diffusion of the rare earth oxide are accelerated, and supply of rare earth elements to a cathode surface is ensured, thereby improving discharge characteristics.

FIG.1

**Description**

Technical Field

The present invention relates to a tungsten material effectively applied to cathode materials used mainly in TIG for low-current operation, plasma spraying, plasma cutting, electrical discharge machining, discharge lamps and the like.

Background Art

Tungsten is a metal having a highest melting point and a relatively favorable electrical conductivity, and is thus widely used as electrode materials requiring heat resistance. However, in a case in which tungsten is used as a cathode, a substance having a low work function is frequently added in order to improve thermoelectron emission characteristics. Among the above substances, $ThO_2$ had a high melting point and a high boiling point, and also had a relatively low work function, and therefore a W-$ThO_2$ alloy having $ThO_2$ dispersed in tungsten has been used as an excellent cathode material (refer to Patent Documents 1 to 3).

Patent Document 1 discloses a tungsten alloy to which oxides of Pr, Nd, Sm and Gd are added. However, data disclosed in Patent Document 1 is a test result of a short period of time of 100 minutes, and it has been impossible to practically obtain an alloy having characteristics stabilized for a long period of time.

In addition, as described in Patent Document 2, in the case of the W-$ThO_2$ alloy, acceleration of reduction of Th by providing a char layer on a surface is widely carried out. However, since Th is a radioactive element, there is a tendency of avoiding use of Th, and thus there is an expectation for materials having equal or superior characteristics to the characteristics of the W-$ThO_2$ alloy of the related art. Even in alloys to which oxides other than $ThO_2$ are added, certain effects can be obtained by providing a char layer in the same manner, but the effects are not sufficient.

Meanwhile, there is another example in which a carbide is added to the alloy as described in Patent Document 3; however, in this case, the carbide plays a role of electron emission, and reduction of an oxide is not taken into account.

Citation List

Patent Documents

Patent Document 1: Japanese Patent Publication Laid-open No. 05-054854
Patent Document 2: Japanese Patent Publication Laid-open No. 04-137349
Patent Document 3: Japanese Patent Publication Laid-open No. 05-067451

Summary of Invention

Technical Problem

Therefore, the invention is to provide a cathode material which becomes an alternative material of a cathode material formed of a W-$ThO_2$ alloy and is formed of a tungsten alloy not including thorium which is a radioactive element.

Solution to Problem

It is considered that, in a tungsten cathode material of the related art to which a rare earth oxide was added, since the oxide had a lower boiling point than $ThO_2$, the oxide was rapidly evaporated from an electrode surface, not supplied in a timely manner by diffusion, and, consequently, a long service life could not be obtained. As means for accelerating diffusion, conversion of the oxide into a sole metallic atom by reduction can be considered, and it is considered to be more effective to convert the oxide inside the alloy instead of on the electrode surface. Although there are documents describing that the added oxide is reduced by tungsten metal, a free energy change $\Delta G$ of a reaction of, for example, the following formula is positive, and the reaction is not easily caused thermodynamically.

$$Nd_2O_3 + 3W = 2Nd + 3WO_3$$

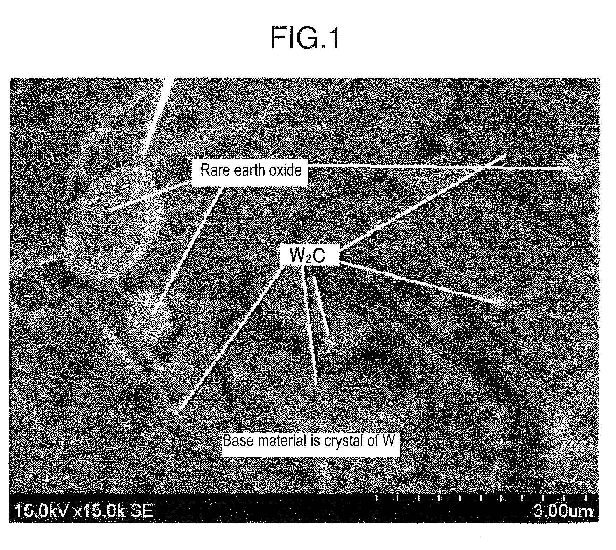

Meanwhile, regarding a reaction of the following formula, it is considered that, when a temperature exceeds approximately 1800°C, $\Delta G$ becomes negative, and the reaction easily proceeds. Herein, since the thermodynamic data only includes WC, the carbide is assumed to be WC; however, in an actual tungsten alloy, the carbide forms $W_2C$ as illustrated in an optical microscopic photograph of Fig. 1, and therefore a reaction temperature may include an error, but there is no change in the fundamental idea.

$$Nd_2O_3 + 3WC = 2Nd + 3W + 3CO$$

When the reaction is rapidly caused in the alloy, Nd is continuously supplied to a surface by diffusion, and discharge characteristics are improved. In order to do so, it is necessary to uniformly and finely disperse a rare earth oxide and a tungsten carbide in the alloy.

In addition, it is also conceivable to use a carbide of non-tungsten; however, when a carbide having a high melting point, for example, TiC, is used, since an increase in the reaction temperature or an adverse influence of generated Ti should also be considered, tungsten carbide is desirable.

In addition, regarding impurities other than tungsten, carbon and the rare earth oxide in a sintered compact, characteristics are not influenced as long as a total content of the included impurities, such as Fe, Mo, Al and Si, is 500 ppm or less (mass fraction). In addition, regarding K as well, no influence is observed in an alloy which includes 500 ppm of K (mass fraction).

An invention according to Claim 1 is a cathode material formed of a tungsten alloy which does not include Th and has at least a carbide and a rare earth oxide dispersed therein. Since a rare earth element has a high melting point and a high boiling point, and also has a relatively low work function, the rare earth element is present on a tungsten cathode surface, whereby the cathode material exhibits superior discharge characteristics. In addition, the carbide diffuses carbon in tungsten at a lamp operation temperature, reduces the rare earth oxide, and assists the diffusion of the rare earth element onto the electrode surface. Therefore, excellent discharge characteristics are exhibited by diffusing both the carbide and the rare earth oxide in tungsten.

An invention according to Claim 2 is the cathode material according to Claim 1 in which the carbide and the rare earth oxide are dispersed throughout the entire tungsten alloy. The carbide and the rare earth oxide are preferably finely dispersed throughout the entire tungsten alloy. When carbon is diffused only onto, for example, the surface and a vicinity of the surface as described in Patent Document 1, the rare earth oxide is not stably and rapidly supplied to the surface.

An invention according to Claim 3 is the cathode material according to Claim 1 or 2 in which an amount of carbon in the tungsten alloy is 10 ppm to 1000 ppm by mass fraction. Carbon is present in the sintered compact in a form of a carbide of tungsten or other components, and an amount thereof is most suitably 10 ppm to 1000 ppm. When the amount is less than 10 ppm, the effect of addition is rarely observed. In addition, a maximum solid solution amount of carbon in tungsten is approximately 1000 ppm, and, when carbon is present in an amount exceeding the maximum solid solution amount, adverse influences, such as dissolution of the tungsten alloy while sintered and while used or an increase in an amount of carbon evaporated from a cathode, are caused.

An invention according to Claim 4 is the cathode material according to any one of Claims 1 to 3 in which the carbide in the tungsten alloy includes tungsten carbide. The carbide in tungsten is particularly suitably tungsten carbide. When the carbide is tungsten carbide, tungsten carbide is sufficiently decomposed at an operation temperature of an electrode so as to emit carbon. In addition, since tungsten carbide does not include other metallic elements, an adverse influence on discharge, such as evaporation, is not easily caused. At this time, tungsten carbide refers to WC or $W_2C$, but it is confirmed that tungsten carbide forms $W_2C$ in an equilibrium state.

An invention according to Claim 5 is the electrode material according to any one of Claims 1 to 4 in which a total amount of the rare earth oxide with respect to the tungsten alloy is 0.2 mass% to 10 mass%. The rare earth element refers to a lanthanoid element, an actinoid element or yttrium. When a content of the rare earth oxide is less than 0.2 mass%, an effect for significantly improving discharge characteristics is not observed. Theoretically, tungsten alloy may contain a certain amount of the rare earth oxide; however, in actual manufacturing of the cathode material, in a case in which more than 10 mass% of the rare earth oxide is added, cracking occurs in a sintering step, and manufacturing becomes significantly difficult.

An invention according to Claim 6 is the electrode material according to any one of Claims 1 to 5 in which half or more of particles of the rare earth oxide by mass are oxides of one or two or more of Sm, Nd, Gd and La. Among oxides of rare earth elements, particularly, the oxides of Sm, Nd, Gd and La have a high melting point, a high boiling point and a low work function, and therefore the oxides are suitable for improving discharge characteristics.

An invention according to Claim 7 is the cathode material according to any one of Claims 1 to 6 in which an average particle diameter of the particles of the rare earth oxide is 0.1 $\mu$m to 2.5 $\mu$m. This is because, when the average particle diameter of the particles of the rare earth oxide is finely dispersed, a surface area of the particles becomes large, and gaps between the particles are narrowed, whereby diffusion of both the carbide and the rare earth oxide becomes easier. It is considered that discharge characteristics are favorable when the particles are fine as described above, and the following examples indicate that the average particle diameter is desirably 2.5 $\mu$m or less. When the average particle diameter is small, there is no problem with discharge characteristics; however, when the average particle diameter is below 0.1 $\mu$m, manufacturing of powder of the oxide is difficult, and the costs become high while the effects are the same.

An invention according to Claim 8 is a cathode formed of the cathode material according to any one of Claims 1 to 7. When the above material is used, the cathode exhibits favorable characteristics as a cathode used in TIG welding electrodes, plasma spraying electrodes, plasma cutting electrodes, electrical discharge machining electrodes, discharge lamp electrodes and the like.

Advantageous Effects of Invention

According to the invention, with a tungsten alloy used in TIG rods, discharge lamps and other cathodes, it is possible to obtain a cathode material and a cathode which have a sufficiently long service life and favorable characteristics without using Th.

Brief Description of Drawing

Fig. 1 is an optical microscopic photograph of a tungsten cathode material according to the invention.

Description of Embodiments

A cathode material of the invention is obtained in the following order.

Tungsten powder, a metallic carbide or carbon powder and a compound of a rare earth element are mixed.

The tungsten powder preferably has a purity of 99.9% or more and an average particle diameter of 0.5 $\mu$m to 20 $\mu$m.

The metallic carbide is most suitably tungsten carbide such as WC and $W_2C$. Since the tungsten carbide serves as a carbon source, and becomes tungsten after decomposed so as to emit carbon as illustrated in the optical microscopic photograph of Fig. 1, the tungsten carbide does not have any adverse influence on discharge characteristics or mechanical characteristics. When a metallic carbide of non-tungsten is selected, the carbide may be selected from carbides of metals having a high melting point which belong to Groups 4a, 5a and 6a, for example, carbides of Mo, Cr, V, Nb, Ta, Ti, Zr and Hf. In addition, regarding the method for adding carbon, carbon is not necessarily added in a form of a metallic carbide, and can also be added in a state of carbon. In a case in which carbon is added in a form of carbon powder, when the carbon has a powder form and a particle diameter of approximately 10 $\mu$m or less, the carbon is easily uniformly dispersed in a tungsten alloy. In addition, it is also possible to decompose an organic binder necessary for pressing, such as paraffin or polyethylene glycol, before sintering and to use the decomposed binder as a carbon source. Even in a case in which the carbon powder or the organic binder is used as a carbon source, it is confirmed that almost all the carbon powder or the organic binder becomes a metallic carbide after sintered. In addition, it is also possible to introduce carbon into a sintered compact in a thermal treatment described below instead of adding a carbide or carbon at this stage. The carbide or carbon is added so that an amount becomes 10 ppm to 1000 ppm in the sintered compact.

In a method for adding the rare earth element, a starting material is not limited to an oxide, and a hydroxide, a nitrate, a carbonate or the like which turns into an oxide by thermal decomposition may be used.

The above starting materials may be mixed in a dry manner or using a so-called doping method in which the compound of the rare earth element is mixed and dried with components thereof which are soluble in a solvent in a solution state.

A mixed powder mixture is press-molded into a desired shape at a pressure of 50 MPa to 400 MPa, and a pressed body is sintered in a reduction atmosphere. A CIP method (cold isostatic pressing) or pressing using a mold can be used in the press molding. Regarding the sintering, an electric current sintering in which electrodes are attached to both ends of a compact and an electric current is made to flow may be carried out, and it is also possible to use a method in which a compact is heated and sintered in a geostatic state in an atmosphere furnace. In the latter case, sintering can be carried out at a sintering temperature of 1600°C to 2200°C. An atmosphere during the sintering is suitably a reduction atmosphere, and particularly suitably an atmosphere in hydrogen since the sintering easily proceeds.

When it is necessary to make the sintering further proceed, it is also possible to carry out HIP (hot isostatic pressing) at a pressure of 30 MPa to 300 MPa and a temperature of 1700°C to 2200°C after the sintering.

When the compact is made into a rod shape, it is possible to further increase the density by carrying out swaging (hot forging). The density is preferably 98% or more, and more preferably 99% or more in terms of relative density.

In addition, it is also possible to introduce carbon into the sintered compact obtained as described above at this stage. In order to introduce carbon, the sintered compact is preferably heated to 1500°C to 2400°C in an atmosphere in which carbon is present. The atmosphere in which carbon is present refers to an atmosphere in which a carbon source is present in a sintering jig, a furnace body, a heater portion or the like. During the above HIP treatment as well, generally, carbon is present in the atmosphere in an HIP furnace, and therefore it is also possible to introduce carbon from the atmosphere.

The compact obtained in the above manner is the cathode material of the invention. A cathode can be obtained by carrying out mechanical works and electrical works as necessary on the cathode material into a desired cathode shape. The cathode is preferable for TIG welding, plasma spraying electrodes, plasma cutting electrodes, electrical discharge machining electrodes, discharge lamp electrodes and the like.

Hereinafter, the invention will be described in more detail using examples.

[Example 1]

First, predetermined amounts of tungsten powder, powder of a rare earth oxide and WC powder, each of which had an average particle diameter of 1 $\mu$m, were mixed in a Henschel mixer. The obtained powder was CIP-molded into a columnar shape at a pressure of 400 MPa, and sintered at 1700°C in hydrogen. Furthermore, an HIP treatment or swaging was carried out after sintering, and the following tests were carried out on a material a sintered compact of which was made to have a density of 99% or more. Oxide-based materials in which sufficient densities could not be obtained will not be described. In addition, for some samples, carbon was not added to the raw material powder, the raw material powder was put into a carbon container, and a carburization treatment was carried out at 2200°C for 1 hour in an Ar atmosphere. A high-pressure mercury lamp was produced using the obtained sample, lighted using electric currents of 6 A and 40 A, a UV output at a time of beginning of lighting was set to 100%, and a UV output rate (%) after 500 hours of lighting was measured.

The amount of carbon in the sintered compact was measured using a glow discharge mass spectrometer (VG-9000 manufactured by V. G. Scientific Co., Ltd.). In addition, a crystal grain diameter (d) of the particles of the rare earth oxide in the sintered compact was computed from an optical microscopic photograph of the polished material taken at a magnification of 1000 times. A case in which the shape is isotropic as described in Patent document 1 can also be considered; however, when a crystal grain diameter is computed from a cross-section cut in the same direction as an electrode surface, there is no practical problem. Mass fractions (f) of particles of the rare earth oxide indicate the amounts of the respective components added to the raw material powder, and since it is confirmed that the results of chemical analyses or optical microscopic photographs of sintered compacts and values computed from theoretical densities of oxides are almost equal, the mass fractions may be measured using any method, which causes no practical problem.

The results of lamp tests obtained from the above experiments are described in Tables 1 and 2. In addition, Comparison Specimen 1 was a commercially available W-2 mass% $ThO_2$ alloy; however, except for that, the specimen was manufactured and tested using the above methods.

Table 1 describes negative electrode materials and the results of 6 A lamp tests. Table 2 describes the negative electrode materials and the results of the 40 A lamp tests.

[Table 1]

| No. | Oxide | | | Added substance mass% | Amount of carbon ppm | UV output rate % | *** Evaluation |
|---|---|---|---|---|---|---|---|
| | Type | f mass% | d $\mu$m | | | | |
| Specimen No. 1 | $Nd_2O_3$ | 1 | 1.7 | 0.01WC | 11 | 85 | A |
| Specimen No. 2 | $Nd_2O_3$ | 1 | 1.7 | 0.03WC | 23 | 95 | A |
| Specimen No. 3 | $Nd_2O_3$ | 1 | 0.1 | 0.03WC | 22 | 93.5 | A |
| Specimen No. 4 | $Nd_2O_3$ | 1 | 1.7 | 0.1WC | 67 | 96 | A |
| Specimen No. 5 | $Nd_2O_3$ | 1 | 1.7 | 0.3WC | 192 | 95.5 | A |
| Specimen No. 6 | $Nd_2O_3$ | 1 | 1.7 | 0.6WC | 370 | 90.5 | A |
| Specimen No. 7 | $Nd_2O_3$ | 1 | 1.7 | 1.6WC | 970 | 86.5 | A |
| Specimen No. 8 | $Nd_2O_3$ | 1 | 1.7 | (Carburization treatment) | 21 | 95 | A |
| Specimen No. 9 | $Nd_2O_3$ | 0.2 | 1.5 | 0.1WC | 70 | 85.5 | A |
| Specimen No. 10 | $Nd_2O_3$ | 1.5 | 2.2 | 0.1WC | 68 | 87.5 | A |

(continued)

| No. | Oxide | | | Added substance mass% | Amount of carbon ppm | UV output rate % | *** Evaluation |
|---|---|---|---|---|---|---|---|
| | Type | f mass% | d $\mu$m | | | | |
| Specimen No. 11 | $Nd_2O_3$ | 3 | 2.3 | 0.1WC | 69 | 84.5 | A |
| Specimen No. 12 | $Nd_2O_3$ | 10 | 2.5 | 0.1WC | 65 | 80.5 | B |
| Specimen No. 13 | $Sm_2O_3$ | 0.2 | 2.4 | 0.1WC | 67 | 85 | A |
| Specimen No. 14 | $Sm_2O_3$ | 1 | 2.5 | 0.1WC | 68 | 93.5 | A |
| Specimen No. 15 | $La_2O_3$ | 0.2 | 2.3 | 0.1WC | 70 | 85 | A |
| Specimen No. 16 | $La_2O_3$ | 1 | 2.4 | 0.1WC | 67 | 85 | A |
| Specimen No. 17 | $Gd_2O_3$ | 0.2 | 2 | 0.1WC | 67 | 86.5 | A |
| Specimen No. 18 | $Gd_2O_3$ | 1 | 2.2 | 0.2WC | 125 | 92.5 | A |
| Specimen No. 19 | ** Complex | 0.3 | 1.5 | 0.1WC | 66 | 90 | A |
| Specimen No. 20 | ** Complex | 1 | 1.6 | 0.1WC | 65 | 93 | A |
| Specimen No. 21 | ** Complex | 2.1 | 1.8 | 0.1WC | 70 | 88 | A |
| Specimen No. 22 | $Nd_2O_3$ | 0.1 | 1.5 | 0.1WC | 66 | 83 | B |
| Specimen No. 23 | $Sm_2O_3$ | 2.5 | 2.9 | 0.1WC | 66 | 83.5 | B |
| Specimen No. 24 | $La_2O_3$ | 0.1 | 2.2 | 0.1WC | 65 | 82.5 | B |
| Specimen No. 25 | $Gd_2O_3$ | 2.5 | 3 | 0.1WC | 66 | 75.5 | B |
| Specimen No. 26 | ** Complex | 0.15 | 1.4 | 0.1WC | 68 | 84 | B |
| Specimen No. 27 | $CeO_2$ | 1 | 2.1 | 0.1WC | 68 | 82.5 | B |
| Specimen No. 28 | $Y_2O_3$ | 1 | 2.1 | 0.1WC | 69 | 84 | B |
| Specimen No. 29 | $Pr_6O_{11}$ | 1 | 3.2 | 0.1WC | 66 | 83.5 | B |
| Specimen No. 30 | $Dy_2O_3$ | 1 | 2 | 0.1WC | 69 | 84 | B |
| Specimen No. 31 | $Nd_2O_3$ | 1 | 1.7 | 0.02Tic | 45 | 82 | B |

(continued)

| No. | Oxide | | | Added substance mass% | Amount of carbon ppm | UV output rate % | *** Evaluation |
|---|---|---|---|---|---|---|---|
| | Type | f mass% | d μm | | | | |
| Specimen No. 32 | $Nd_2O_3$ | 1 | 1.7 | 0.06Tac | 44 | 83.5 | B |
| Specimen No. 33 | $Nd_2O_3$ | 1 | 1.7 | 0.1Mo$_2$C | 48 | 83 | B |
| Comparative Example 1 | $Th_2O$ | 2 | 3.6 | - | 7 | 84.5 | (Criterion) |
| Comparative Example 2 | - | 0 | - | 0.1WC | 69 | 62 | C |
| Comparative Example 3 | $ZrO_2$ | 1 | 1 | 0.2WC | 108 | 60.9 | C |

Table 2 describes the negative electrode materials and the results of the 40 A lamp tests.

[Table 2]

| No. | Oxide | | | Added substance mass% | Amount of carbon ppm | UV output rate % | *** Evaluation |
|---|---|---|---|---|---|---|---|
| | Type | f mass% | d μm | | | | |
| Specimen No. 34 | $Nd_2O_3$ | 1 | 1.7 | 0.03WC | 23 | 93.5 | A |
| Specimen No. 35 | $Nd_2O_3$ | 2 | 2.4 | 0.1WC | 69 | 93 | A |
| Specimen No. 36 | $Sm_2O_3$ | 1 | 2.5 | 0.1WC | 68 | 91.5 | A |
| Specimen No. 37 | $La_2O_3$ | 1 | 2.4 | 0.1WC | 67 | 80.5 | A |
| Comparative Example 4 | $Th_2O$ | 2 | 3.6 | - | 7 | 79.5 | (Criterion) |

Specimens No. 1 to 37 are specimens of the invention. Meanwhile, since Specimen No. 3 is a specimen having the same composition as Specimen No. 2 which has been swaged so as to have a fine diameter, and the particles of the oxide are also deformed to be fine and long, the crystal grain diameter on the cross-section is small.

In Tables 1 and 2, "complex" refers to a compound obtained by blending equal amounts of $Nd_2O_3$, $Sm_2O_3$, $La_2O_3$, $Gd_2O_3$, $Y_2O_3$ and $Tm_2O_3$ by mass%.

In Tables 1 and 2, regarding "evaluation", "A" indicates being equal or superior to W-ThO$_2$, "B" indicates 80% or more after a predetermined period of time elapses, and "C" indicates less than 80% after the predetermined period of time elapses.

Although not including ThO$_2$, in the specimens of the invention described in Tables 1 and 2, the UV outputs slightly decrease. Particularly, a material of Claim 2 maintains an equal or superior UV output to W-ThO$_2$ of Comparison Specimen 4 which is a comparison subject.

Comparative Example 2 is a comparison specimen to which the rare earth oxide is not added. Among the specimens, the UV output rate decreased most.

When the rare earth oxide accounts for 0.2 mass% to 10 mass%, half or more of the amount (mass fraction) of dispersed particles of the rare earth oxide are oxides of one or two or more of Sm, Nd, Gd and La, and an average particle diameter of the above oxides is set to 2.5 μm or less, tungsten alloys exhibit equal or superior characteristics to a W-ThO$_2$ alloy.

In addition, Comparative Example 3 was an example in which an oxide different from the rare earth oxide was used, and no improvement of discharge characteristics was observed when the rare earth oxide was not included in spite of the amount of carbon being in the range of the invention.

Regarding the amount of carbon, it was found that, in all the specimens of the invention having an amount of carbon in 10 ppm to 1000 ppm (mass fraction), the UV output rates were not easily decreased.

In addition, when an oxide other than the oxides of Sm, Nd, Gd and La was solely added, a discharge effect did not become higher than that of $ThO_2$, but a certain effect was exhibited due to the addition. In addition, in a case in which the above oxide was added together with the oxides of Sm, Nd, Gd and La as the rare earth oxides, the discharge characteristics became equal or superior to those of the $W\text{-}ThO_2$ alloy as described in Specimens No. 17 to 19 and Specimen No. 24.

Meanwhile, necessary characteristics such as starting voltage, output efficiency and output fluctuation were investigated, there was no particular problem, and it was determined that, generally, the alloy of the invention has equal or superior characteristics to those of the $W\text{-}ThO_2$ alloy.

[Example 2]

Swaging and drawing (a processing method in which a specimen is heated using a flame, and made to pass through a die, thereby decreasing an outer diameter) were carried out on the same specimens as Specimens 1, 7 and 19 used in Example 1 until $\phi 1$ (mm) is reached. A linear tungsten rod obtained in the above manner was used as a cathode, and 2 mm-thick iron sheets were TIG-welded. No defect was observed in the welded portion, and no abnormality such as deformation was found in the cathodes as well.

[Example 3]

The same specimens as Specimens 1, 19, 23 and 31 used in Example 1 were mechanically processed into a tiered conical shape after cut, and used as cathodes of plasma spraying electrodes. The specimens were used in spraying of zirconium oxide, and any abnormality was not found in sprayed surface and the cathodes. Meanwhile, in addition to the tiered conical shape, a simply conical shape, a substantially conical shape with an R attached to a front end, and a shape having a certain straight portion which becomes narrower toward the front end can also be applied.

[Example 4]

The same specimens as Specimens 21, 27, 33 and 34 used in Example 1 were cut into a rod shape, then, mechanically processed, and used as electrodes (corresponding to negative electrodes) for plasma cutting. 500 mm-thick tool steel which was a material to be cut was cut in a plasma cutting machine for which the above negative electrode was used. Argon gas was used as a gas used during the cutting. There was no abnormality during the cutting, the cut surfaces were clean, and no abnormality was found in the electrodes.

[Example 5]

The same specimens as Specimens 1, 9, 17 and 34 used in Example 1 were cut into a rod shape, and then mechanically processed, thereby obtaining electric discharge machining electrodes matched to a hole shape of cemented carbide which was an article to be processed. The cemented carbide which was an article to be processed was electrical-discharge-machined using the above electrode. There was no abnormality during the machining, the cut surfaces were clean, and no abnormality was found in the electrodes.

**Claims**

1. A cathode material comprising a tungsten alloy which does not include Th and has at least a carbide and a rare earth oxide dispersed in the alloy.

2. The cathode material according to Claim 1,
   wherein the carbide and the rare earth oxide are dispersed throughout the entire tungsten alloy.

3. The cathode material according to Claim 1 or 2,
   wherein an amount of carbon in the tungsten alloy is 10 ppm to 1000 ppm by mass fraction.

4. The cathode material according to any one of Claims 1 to 3,
   wherein the carbide in the tungsten alloy includes tungsten carbide.

5.  An electrode material according to any one of Claims 1 to 4,
    wherein a total amount of the rare earth oxide with respect to the tungsten alloy is 0.2 mass% to 10 mass%.

6.  An electrode material according to any one of Claims 1 to 5,
    wherein half or more of particles of the rare earth oxide by mass are oxides of one or two or more of Sm, Nd, Gd and La.

7.  The cathode material according to any one of Claims 1 to 6,
    wherein an average particle diameter of the particles of the rare earth oxide is 0.1 $\mu$m to 2.5 $\mu$m.

8.  A cathode formed of the cathode material according to any one of Claims 1 to 7.

# FIG.1

| | | |
|---|---|---|
| **INTERNATIONAL SEARCH REPORT** | | International application No. |
| | | PCT/JP2012/057263 |

A.  CLASSIFICATION OF SUBJECT MATTER
*H05H1/34*(2006.01)i, *B22F5/00*(2006.01)i, *B23K35/32*(2006.01)i, *C22C27/04*
(2006.01)i, *H01J1/14*(2006.01)i, *H01J61/06*(2006.01)i, *H01J61/073*(2006.01)i

According to International Patent Classification (IPC) or to both national classification and IPC

B.  FIELDS SEARCHED

Minimum documentation searched (classification system followed by classification symbols)
H05H1/34, B22F5/00, B23K35/32, C22C27/04, H01J1/14, H01J61/06, H01J61/073

Documentation searched other than minimum documentation to the extent that such documents are included in the fields searched
  Jitsuyo Shinan Koho   1922-1996 Jitsuyo Shinan Toroku Koho 1996-2012
  Kokai Jitsuyo Shinan Koho 1971-2012 Toroku Jitsuyo Shinan Koho 1994-2012

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 9-111387 A  (Toho Kinzoku Co., Ltd.), 28 April 1997 (28.04.1997), entire text; all drawings (Family: none) | 1-8 |
| X | JP 2000-200581 A  (ORC Mfg. Co., Ltd.), 18 July 2000 (18.07.2000), entire text; all drawings (Family: none) | 1-8 |

| ☐ | Further documents are listed in the continuation of Box C. | ☐ | See patent family annex. |
|---|---|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 08 June, 2012 (08.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

11

EP 2 690 934 A1

**INTERNATIONAL SEARCH REPORT**

| International application No. |
|---|
| PCT/JP2012/057263 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
```
    The invention of claim 1 does not have a special technical feature in the
light of the contents disclosed in JP 9-111387 A and JP 2000-200581 A.
    Therefore, the invention of claim 1 and the inventions of claims 2-8 do
not comply with the requirement of unity of invention.
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

12

**EP 2 690 934 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5054854 A
- JP 4137349 A
- JP 5067451 A